# EUROPEAN PATENT APPLICATION

(11) **EP 4 648 033 A1**
(43) Date of publication of application: **12.11.2025**
(21) Application number: 23922631.9
(22) Date of filing: 14.02.2023
(51) Int. Cl.: G08G 5/00, B64C 13/18

(54) **FLIGHT PATH GENERATION SYSTEM, UNMANNED AERIAL VEHICLE, AND FLIGHT PATH GENERATION METHOD**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2023/004972
(87) International publication number: WO 2024/171292

(57) **Abstract**

A flight path generation system for generating a three-dimensional flight path for an unmanned aerial vehicle, includes: an acquisition device that acquires route data including information of a two-dimensional flight path of the unmanned aerial vehicle and map data including information of elevation at each point on the two-dimensional flight path; and a processor that generates the three-dimensional flight path by determining a flight altitude of the unmanned aerial vehicle from a ground on the two-dimensional flight path based on the two-dimensional flight path and the elevation. Wherein, under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region, the processor determines the flight altitude in the excess region and the first region such that: a maximum value of the flight altitude of the unmanned aerial vehicle in the excess region does not exceed the first predetermined altitude, the unmanned aerial vehicle descends in a descent region including part of the excess region or the first region, and the unmanned aerial vehicle moves horizontally over regions other than the descent region in the excess region and the first region.

## Description

### TECHNICAL FIELD

The present disclosure relates to a flight path generation system, an unmanned aerial vehicle and a flight path generation method.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle including multiple rotary wings (Multi-Rotor UAV) is also called a "drone", "multirotor", or "multicopter", and is widely used for applications including aerial photography, surveying, logistics, and agricultural spraying.

Patent Document 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

There is a demand for efficient control of unmanned aerial vehicle flight. For example, there is a demand for further improvement in methods and systems for generating flight paths for unmanned aerial vehicles.

The present disclosure provides an unmanned aerial vehicle, a flight path generation system, and a flight path generation method capable of efficiently controlling flight.

### SOLUTION TO PROBLEM

In an exemplary and non-limiting embodiment, a flight path generation system of the present disclosure is a system for generating a three-dimensional flight path for an unmanned aerial vehicle, including: an acquisition device that acquires route data including information of a two-dimensional flight path of the unmanned aerial vehicle and map data including information of elevation at each point on the two-dimensional flight path; and a processor that generates the three-dimensional flight path by determining a flight altitude of the unmanned aerial vehicle from the ground on the two-dimensional flight path based on the two-dimensional flight path and the elevation, wherein, under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region, the processor determines the flight altitude in the excess region and the first region such that (i) a maximum value of the flight altitude of the unmanned aerial vehicle in the excess region does not exceed the first predetermined altitude, (ii) the unmanned aerial vehicle descends in a descent region including part of the excess region or the first region, and (iii) the unmanned aerial vehicle moves horizontally over regions other than the descent region in the excess region and the first region.

In an exemplary and non-limiting embodiment, a flight path generation method of the present disclosure is a method for generating a three-dimensional flight path for an unmanned aerial vehicle, including: acquiring route data including information of a two-dimensional flight path of the unmanned aerial vehicle and map data including information of elevation at each point on the two-dimensional flight path; and determining a flight altitude of the unmanned aerial vehicle from the ground on the two-dimensional flight path based on the two-dimensional flight path and the elevation, wherein the determining the flight altitude includes, under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region, determining the flight altitude in the excess region and the first region such that (i) a maximum value of the flight altitude of the unmanned aerial vehicle in the excess region does not exceed the first predetermined altitude, (ii) the unmanned aerial vehicle descends in a descent region including part of the excess region or the first region, and (iii) the unmanned aerial vehicle moves horizontally over regions other than the descent region in the excess region and the first region.

### ADVANTAGEOUS EFFECTS OF INVENTION

According to embodiments of an unmanned aerial vehicle, a flight path generation system, and a flight path generation method of the present disclosure, the flight of an unmanned aerial vehicle can be controlled efficiently.

### BRIEF DESCRIPTION OF DRAWINGS

FIG. **1A** is a block diagram schematically showing several examples of rotation drive devices for rotating rotors in an unmanned aerial vehicle including a plurality of rotors.
FIG. **1B** is a plan view schematically showing one example of a basic configuration of an unmanned aerial vehicle including a plurality of rotors.
FIG. **1C** is a side view schematically showing one example of a basic configuration of an unmanned aerial vehicle including a plurality of rotors.
FIG. **1D** is a plan view schematically showing another example of a basic configuration of an unmanned aerial vehicle including a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3A** is a plan view schematically showing an example of a multicopter flight path on a two-dimensional map.
FIG. **3B** is a diagram schematically showing an example of a multicopter flying along a flight path.
FIG. **3C** is a diagram schematically showing another example of a multicopter flying along a flight path.
FIG. **4A** is a diagram schematically showing an example of a multicopter flying along a flight path using the flight path generation system according to an exemplary embodiment.
FIG. **4B** is a diagram schematically showing another example of a multicopter flying along a flight path using the flight path generation system according to an exemplary embodiment.
FIG. **4C** is a diagram schematically showing another example of a multicopter flying along a flight path using the flight path generation system according to an exemplary embodiment.
FIG. **4D** is a diagram schematically showing another example of a multicopter flying along a flight path using the flight path generation system according to an exemplary embodiment.
FIG. **4E** is a diagram schematically showing another example of a multicopter flying along a flight path using the flight path generation system according to an exemplary embodiment.
FIG. **4F** is a diagram schematically showing another example of a multicopter flying along a flight path using the flight path generation system according to an exemplary embodiment.
FIG. **5A** is a diagram schematically showing an example of a flight path on a two-dimensional map.
FIG. **5B** is a diagram schematically showing vertical movement of a multicopter when flying along a flight path.
FIG. **5C** is a diagram schematically showing vertical movement of a multicopter when flying along a flight path.
FIG. **6** is a block diagram showing an example of hardware configuration of a control device.
FIG. 7 is a diagram schematically showing an example of a communication network to which a multicopter is connected.

### DESCRIPTION OF EMBODIMENTS

An unmanned aerial vehicle including a plurality of rotors includes a rotation drive device that rotates the rotors (hereinafter referred to as "propellers"). Hereinafter, such an unmanned aerial vehicle is referred to as a "multicopter".

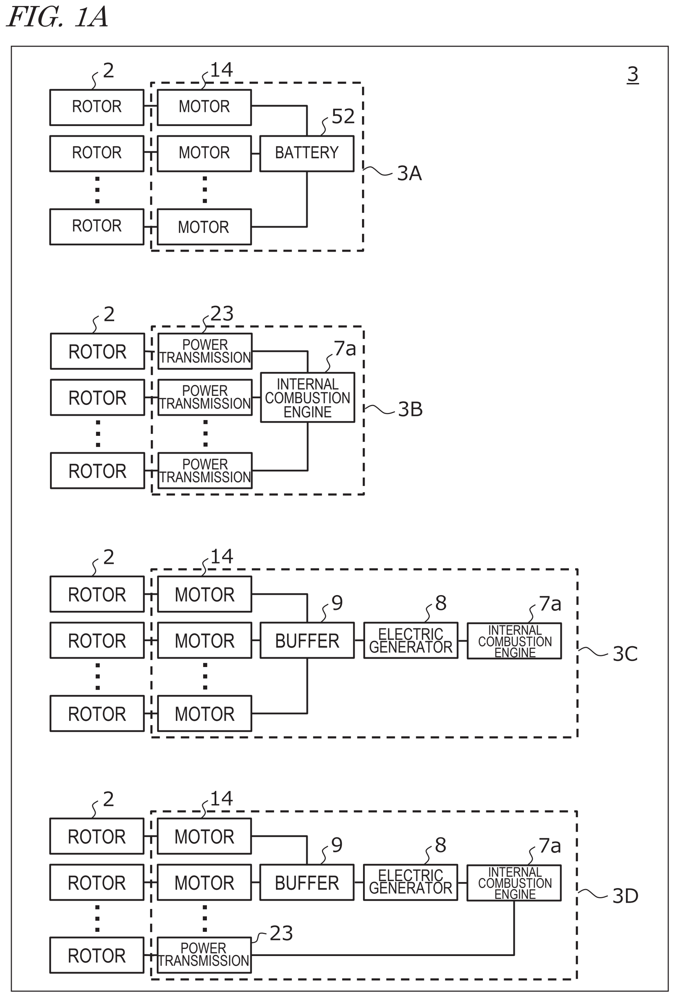

The configuration of rotation drive devices included in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

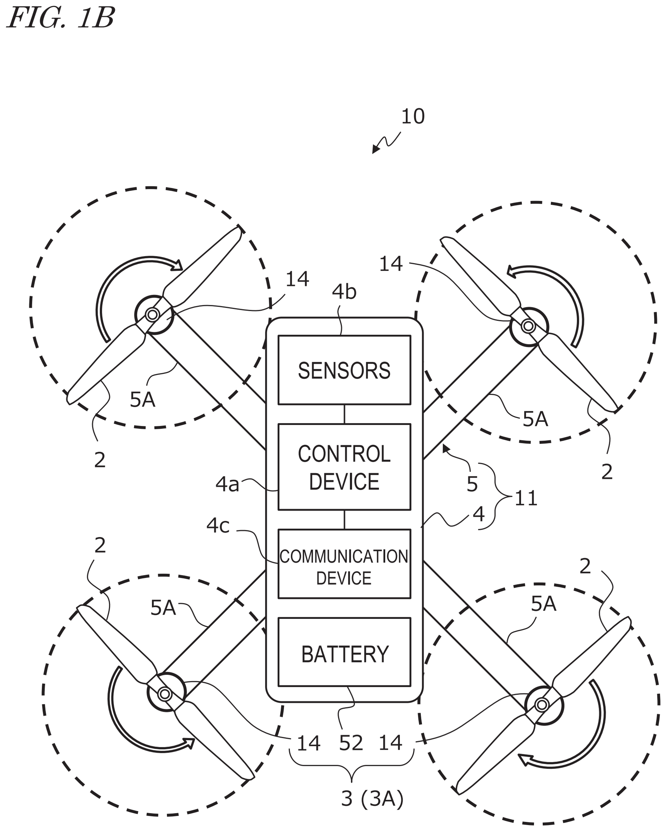

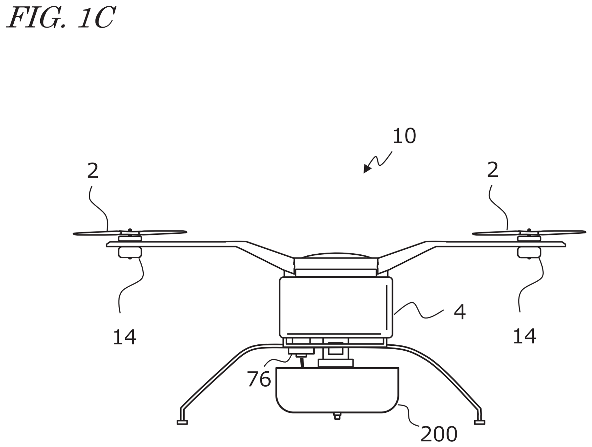

FIG. **1B** is a plan view schematically showing a basic configuration example of multicopter **10.** In the configuration example of FIG. **1B****,** a rotation drive device **3** includes the first rotation drive device **3A** shown in FIG. **1A****.** That is, in this example, rotation drive device **3** (**3A**) includes motors **14** and a battery **52.** FIG. **1C** is a side view schematically showing the multicopter **10.**

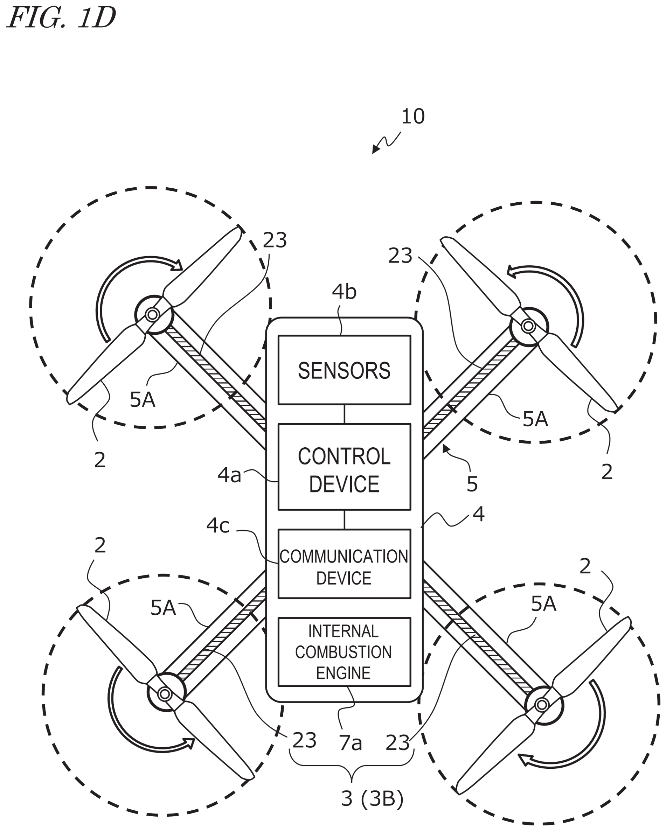

A multicopter **10** shown in Figs. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11**".

In the example of FIG. **1B****,** the multicopter **10** is a quad-type multicopter (quadcopter) including four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are included, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** including the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter includes an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be including mechanisms such as robotic hands. In that case, a single implement **200** can perform various ground operations. When the implement **200** includes space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** includes power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

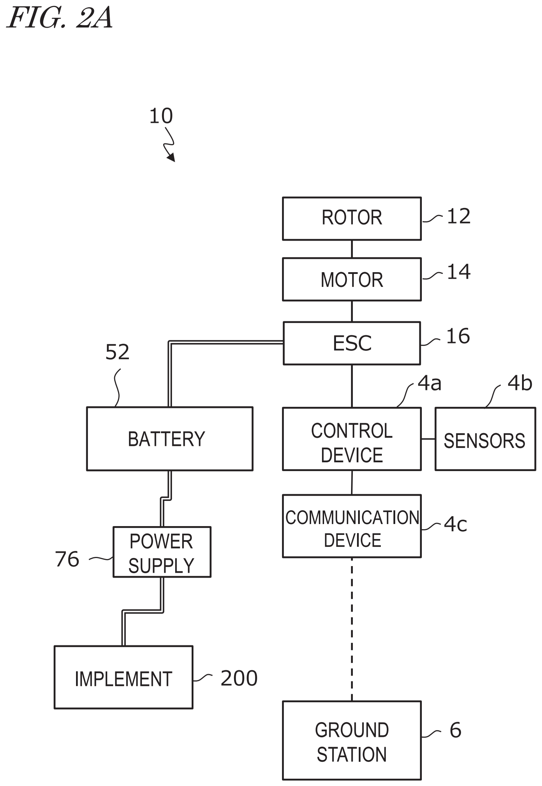

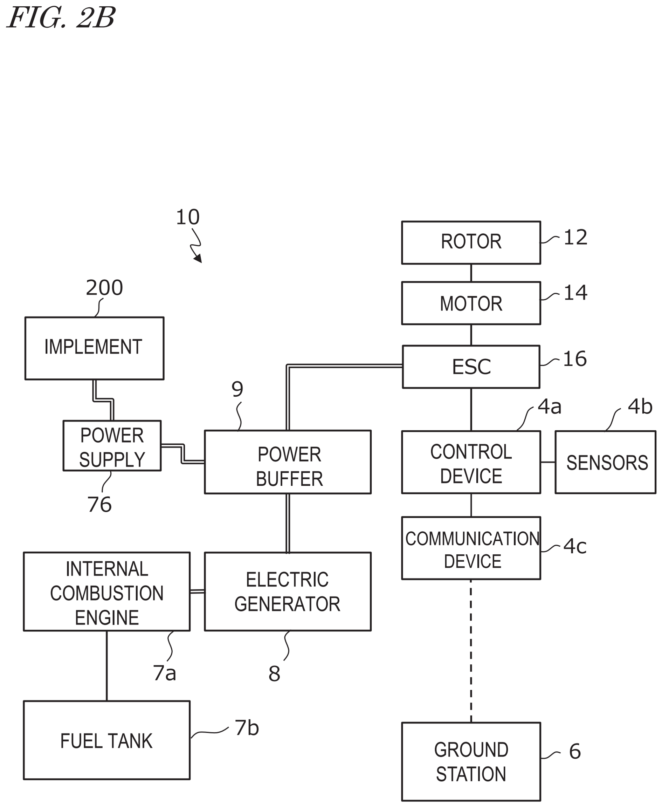

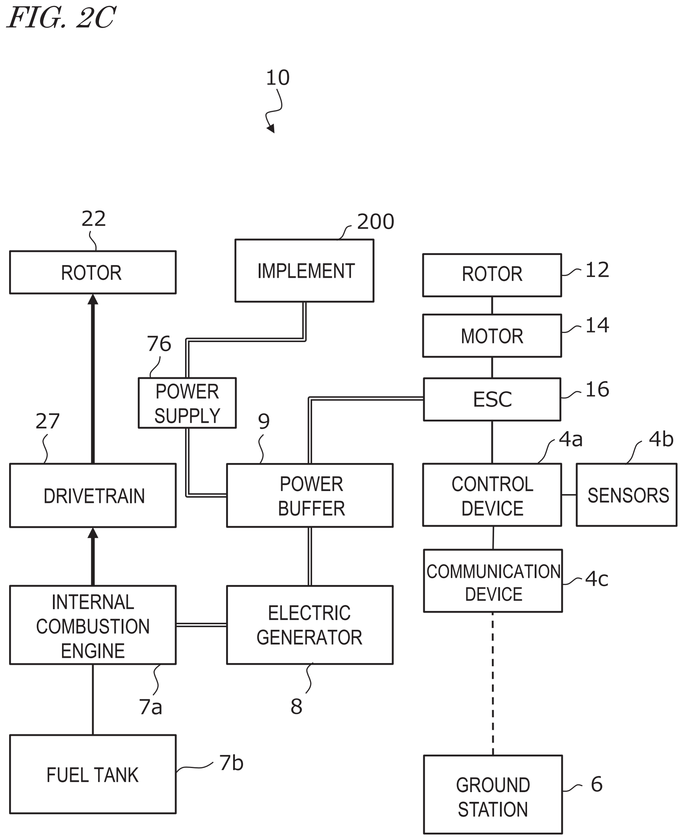

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.** The ESC **16** may be included in the control device **4a.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

### <Flight Path Generation System>

A multicopter may be required to fly within a predetermined range of altitude. For example, flight at a height exceeding a certain height from the ground or water surface may be regulated by law. In Japan, flight in areas (airspace) at a height of 150 meters or more from the ground (or land surface) or water surface is regulated by the Civil Aeronautics Act. Hereinafter, the height from the ground (or land surface) or water surface may be referred to as "flight altitude".

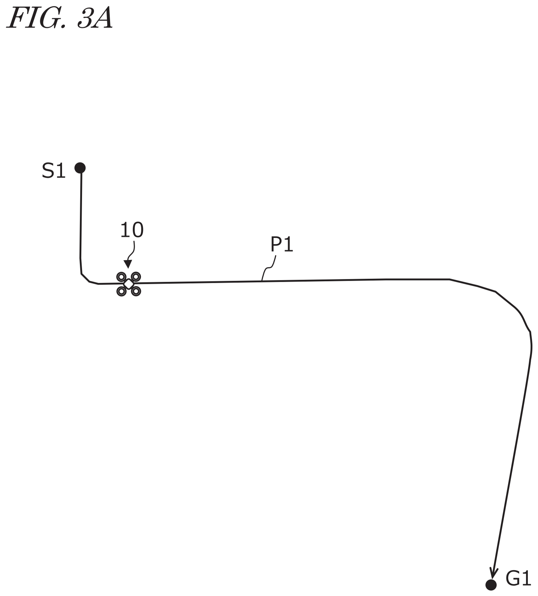

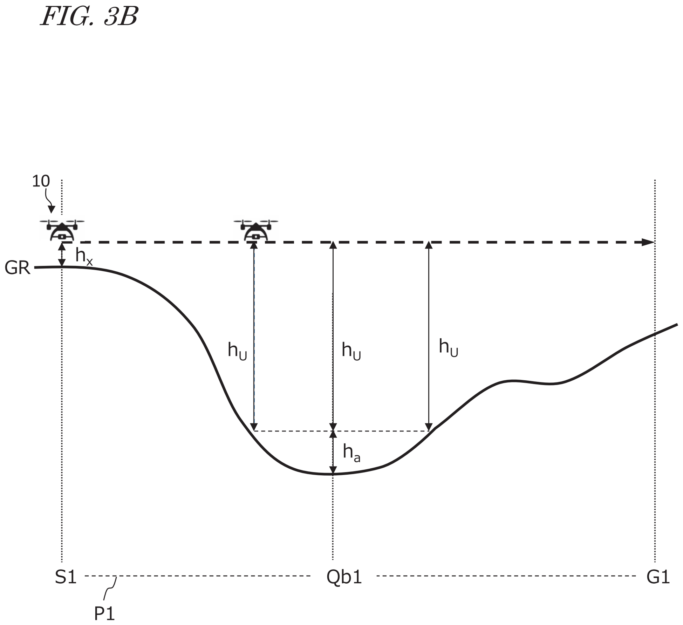

FIG. **3A** schematically shows an example of a flight path of a multicopter **10** on a two-dimensional map (i.e., a two-dimensional flight path). As shown in FIG. **3A****,** when the multicopter **10** flies along the two-dimensional flight path P1 (hereinafter, may be simply referred to as "flight path P1") from point S1 to point G1, it might be considered, for example, to move the multicopter **10** horizontally along the flight path P1, as shown in FIG. **3B****.** However, as shown in FIG. **3B****,** when there are large variations in elevation along the flight path P1, if the multicopter **10** is moved horizontally, even if the flight altitude (i.e., height from the ground GR) hₓ at the start point S1 of flight path P1 is set not to exceed a predetermined altitude h_{U} (i.e., hₓ ≤ h_{U}), there may be cases where the flight altitude exceeds the predetermined altitude h_{U} along the flight path P1. Elevation is the height from the geoid surface (simply referred to as "geoid") or from the mean sea level to the ground (or land surface) at each point on the map. In the example of FIG. **3B****,** the height from the ground GR takes its maximum value at point Qb1, which is the point of lowest elevation along the flight path P1. The height from the ground GR at point Qb1 is h_{U} + hₐ, which exceeds the predetermined altitude h_{U}.

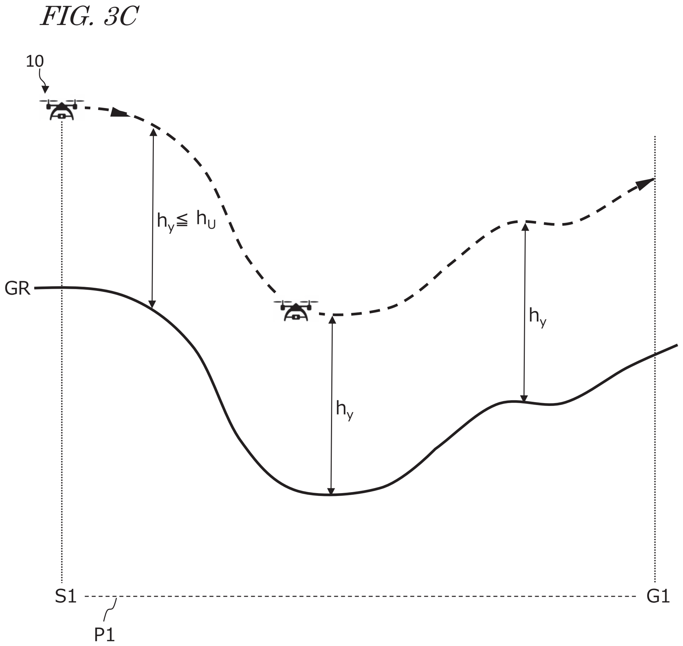

Therefore, as shown in the example of FIG. **3C****,** it might be considered to fly the multicopter **10** while maintaining a constant height from the ground GR. When the multicopter **10** flies along the flight path P1 with significant elevation variations, if the flight altitude is maintained at an altitude h_{y} that does not exceed the predetermined altitude h_{U} (i.e., h_{y} ≤ h_{U}), the multicopter **10** needs to move vertically (i.e., descend or ascend) in accordance with changes in the elevation of the ground GR. When a multicopter flies along a two-dimensional flight path, moving vertically as well as horizontally may increase the required driving energy compared to moving only horizontally. From the perspective of minimizing the increase in driving energy of the multicopter required for the flight, it is preferable to minimize vertical movement as much as possible.

The flight path generation system according to the embodiment of the present disclosure described below allows the multicopter to fly within a predetermined altitude range while minimizing the increase in driving energy of the multicopter required for the flight. The flight path generation system according to the embodiment of the present disclosure enables efficient control of the flight of the multicopter.

The flight path generation system according to an embodiment of the present disclosure generates a three-dimensional flight path for multicopter **10.** The three-dimensional flight path includes at least a two-dimensional flight path shown on a two-dimensional map and the flight altitude at each point along the two-dimensional flight path. The flight path generation system includes an acquisition device that acquires route data including information of the two-dimensional flight path and map data including information of elevation at each point on the two-dimensional flight path, and a processor that generates the three-dimensional flight path by determining the flight altitude of the multicopter **10** on the two-dimensional flight path based on the two-dimensional flight path and the elevation.

The two-dimensional flight path is typically defined by a group of waypoints, each containing information of latitude and longitude, and the route data may be composed of such a group of waypoints. The processor determines, for example, the flight altitude at each waypoint, based on the two-dimensional flight path and elevation. The route data may include information about the three-dimensional flight path. That is, each waypoint constituting the route data may further have information of the flight altitude. In that case, the processor can update the flight altitude at each waypoint.

The map data may be GIS data including elevation data in compliance with a geographic information system (GIS). An example of the data model for the map data is the Digital Elevation Model (DEM), which is classified as a raster data format. The DEM represents the height from the geoid to the ground with ground features such as buildings or trees removed.

The acquisition device in the flight path generation system according to an embodiment of the present disclosure is, for example, the communication device **4c** mentioned earlier. The acquisition device acquires route data including information of a predetermined two-dimensional flight path from, for example, a cloud server. Additionally, the acquisition device accesses a cloud server that manages map data via a network to acquire the map data. The acquisition device may further store the acquired route data and map data in a storage device. The storage device may be, for example, a semiconductor memory, magnetic storage device, or optical storage device, or a combination thereof. The processor may store the once-acquired route data and map data in the storage device in advance and update them after a predetermined period. The timing and frequency of the acquisition device acquiring route data and map data may be arbitrary, and may be, for example, at the power-up of the multicopter **10,** or during the flight of the multicopter **10.**

The processor in the flight path generation system according to an embodiment of the present disclosure is a device comprising one or more semiconductor integrated circuits (e.g., processors).

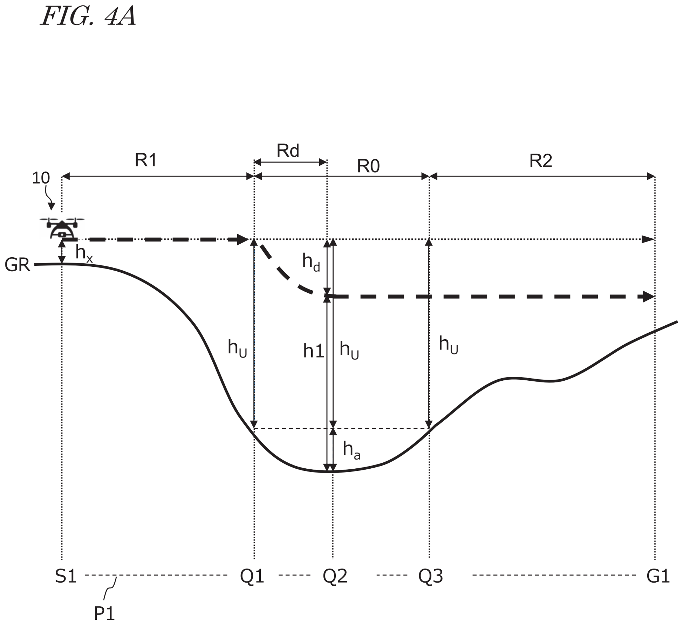

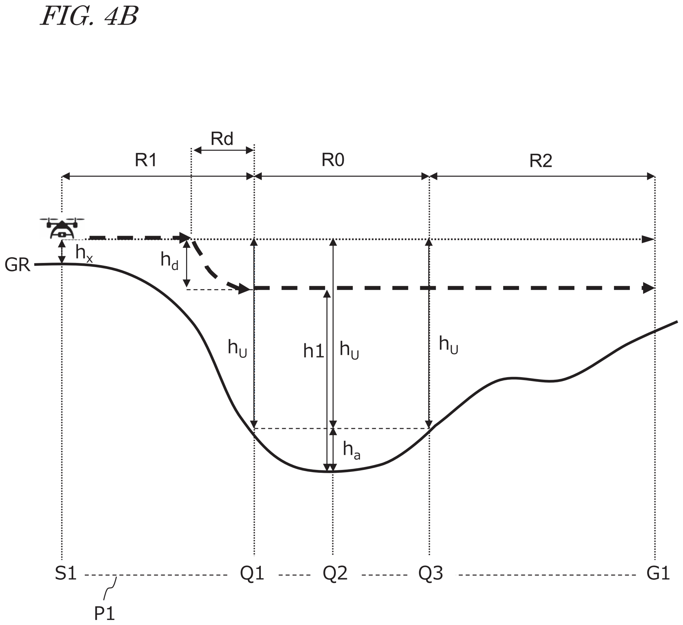

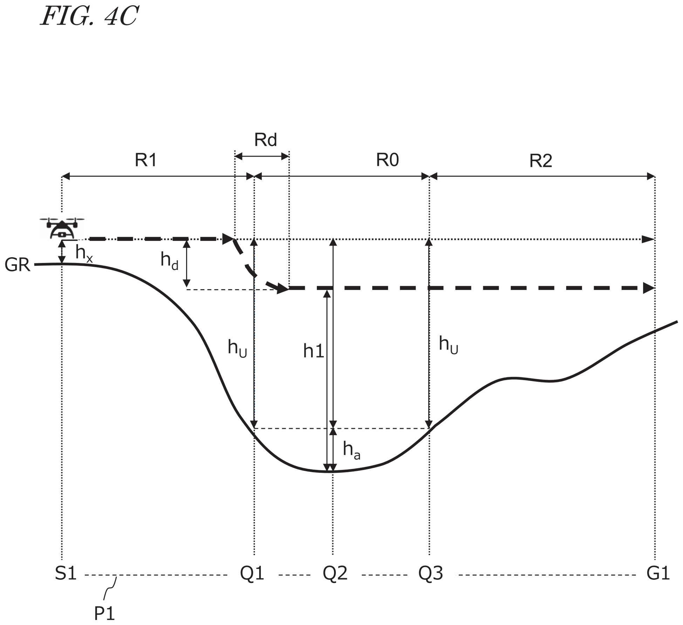

Referring to FIGs. **4A****,** **4B****,** and **4C****,** an example of processing performed by the processor in the flight path generation system according to this embodiment will be explained. FIGs. **4A****,** **4B****,** and **4C** are diagrams schematically showing examples of the multicopter **10** flying along the flight path P1 using the flight path generation system according to this embodiment. The dashed arrows in FIGs. **4A****,** **4B****,** and **4C** schematically show how the multicopter **10** flies.

First, referring to FIG. **4A****.** Under an assumption that the flight path P1 is traveled by the multicopter **10** moving horizontally (dotted arrow in FIG. **4A**), if an excess region RO where the flight altitude (i.e., height from the ground GR) of the multicopter **10** exceeds a predetermined altitude (may be referred to as "first predetermined altitude") h_{U} and a first region R1 where the flight altitude does not exceed the predetermined altitude h_{U} occur on the flight path P1, the first region R1 leading to the excess region R0, the processor determines the flight altitude in the excess region R0 and the first region R1 as follows. The processor determines the flight altitude in the excess region R0 and the first region R1 such that (i) the maximum value of the flight altitude in the excess region R0 does not exceed the predetermined altitude h_{U}, (ii) the multicopter **10** descends in a descent region Rd including part of the excess region R0 or the first region R1, and (iii) the multicopter **10** moves horizontally across regions other than the descent region Rd in the excess region R0 and the first region R1. In the example of FIG. **4A****,** the maximum value h1 of the flight altitude in the excess region R0 is equal to or less than the predetermined altitude h_{U} (i.e., h1 ≤ h_{U}). In the example of FIG. **4A****,** the descent region Rd is part of the excess region R0 and does not include the first region R1.

Note that in this specification, a "region" of a two-dimensional flight path refers to at least a range of part of the two-dimensional flight path and is not limited to an area extended two-dimensionally. The multicopter **10** flies along the flight path P1 in the order of the first region R1 and the excess region R0. In this example, the excess region R0 is continuously followed by the first region R1. In the illustrated example, the first region R1 is the range from the point S1 to the point Q1, and the excess region RO is the range from the point Q1 to the point Q3.

According to the flight path generation system of the present embodiment, since the vertical movement of the multicopter **10** can be suppressed, the increase in required driving energy can be suppressed.

The processor, in the assumption that the multicopter **10** moves horizontally along the flight path P1 (dotted arrow in FIG. **4A****),** sets the flight altitude hₓ at the start point S1 of the flight path P1 such that it does not exceed the predetermined altitude hu (i.e., hₓ ≤ hu). By moving the multicopter **10** horizontally along the flight path P1 from the start point S1 and beginning to descend at the same time as reaching the excess region R0, or as shown in the examples of FIGs. **4B** and **4C****,** before the multicopter **10** reaches the excess region R0, it is possible to ensure that the flight altitude in the excess region R0 does not exceed the predetermined altitude h_{U}. By minimizing the distance that the multicopter **10** moves vertically as much as possible, the increase in required driving energy can be suppressed. The distance h_{d} that the multicopter **10** moves vertically in the descent region Rd is equal to or greater than the difference hₐ between the maximum value and the minimum value of elevations in the excess region R0. When the maximum value h1 of the flight altitude in the excess region R0 is equal to the predetermined altitude h_{U} (h1 = h_{U}), then h_{d} = hₐ. The difference hₐ between the maximum value and the minimum value of elevations in the excess region R0 is the difference in elevation between the point Q2, which has the lowest elevation in the excess region R0, and the points Q1 and Q3, which have the highest elevations in the excess region R0. The processor determines, for example, the flight altitude in the excess region R0 such that the flight altitude at the point Q2 reaches h1 by having the multicopter **10** descend in the descent region Rd.

In the example shown in FIG. **4A****,** under the assumption that the multicopter **10** moves horizontally along the flight path P1 (dotted arrow in FIG. **4A**), a second region R2 where the flight altitude does not exceed the predetermined altitude h_{U} further occurs on the flight path P1, the second region R2 following the excess region R0. In this case, the processor determines the flight altitude in the second region R2 such that the multicopter **10** moves horizontally across the second region R2. In this example, the multicopter **10** moves horizontally from regions other than the descent region Rd in the excess region R0 to the second region R2.

Referring to FIGs. **4B** and **4C****,** other examples of processing performed by the flight path generation system will be explained.

The example shown in FIG. **4B** differs from the example in FIG. **4A** in that the descent region Rd is part of the first region R1 and does not include the excess region R0. The example shown in FIG. **4C** differs from the example in FIG. **4A** in that the descent region Rd includes part of the excess region R0 and part of the first region R1. In the examples of FIGs. **4B** and **4C****,** as in the example of FIG. **4A****,** the increase in required driving energy can be suppressed.

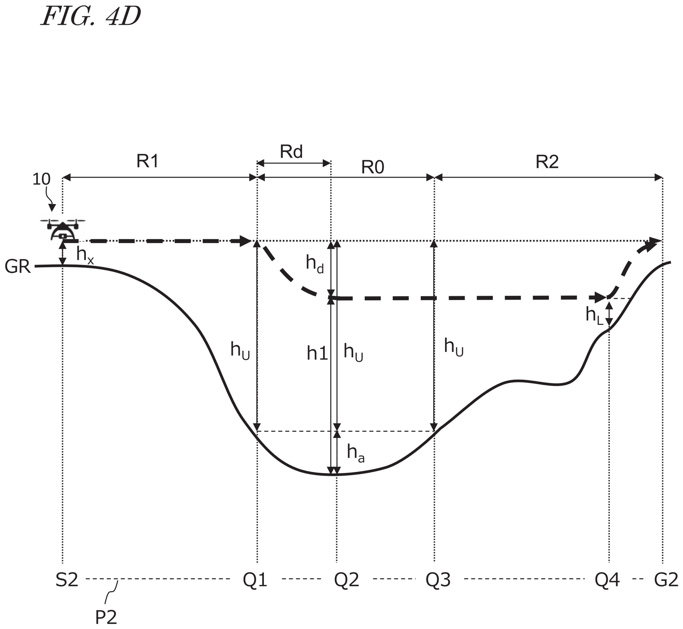

Referring to FIG. **4D****,** another example of processing performed by the flight path generation system will be explained. FIG. **4D** is a diagram schematically showing an example of the multicopter **10** flying along a two-dimensional flight path P2 (hereinafter, may be simply referred to as "flight path P2") from point S2 to point G2 using the flight path generation system. Explanations of matters common to FIG. **4A** will be omitted.

In the example shown in FIG. **4D****,** the processor determines the flight altitude in the second region R2 such that the flight altitude of the multicopter **10** in the second region R2 is equal to or greater than a predetermined altitude (may be referred to as "second predetermined altitude") h_{L}, by making the multicopter **10** ascend in at least part of the second region R2. For example, the multicopter **10** is moved horizontally from the start point Q3 of the second region R2 and begins to ascend at the same time as reaching point Q4 where the flight altitude reaches the predetermined altitude h_{L}. Alternatively, the multicopter **10** may begin to ascend before reaching the point Q4. In this case as well, by minimizing the distance that the multicopter **10** moves vertically as much as possible, the increase in required driving energy can be suppressed.

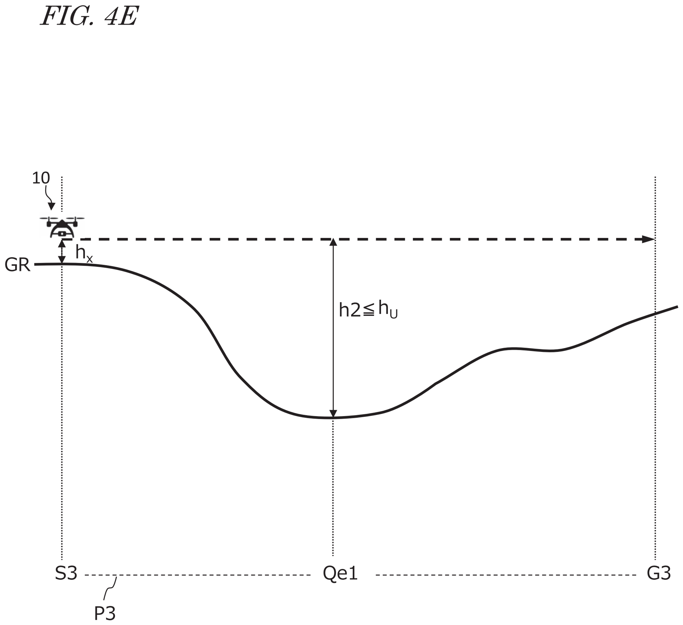

Referring to FIG. **4E****,** another example of processing performed by the flight path generation system will be explained. FIG. **4E** is a diagram schematically showing an example of the multicopter **10** flying along a two-dimensional flight path P3 (hereinafter, may be simply referred to as "flight path P3") from point S3 to point G3 using the flight path generation system. Explanations of matters common to FIG. **4A** will be omitted.

As shown in the example of FIG. **4E****,** under an assumption that the flight path P3 is traveled by the multicopter **10** moving horizontally, if no region where the flight altitude exceeds the predetermined altitude h_{U} occurs on the flight path P3, the processor determines the flight altitude on the flight path P3 such that the multicopter **10** moves horizontally along the flight path P3. The maximum value of the flight altitude of the multicopter **10** along the flight path P3 is the flight altitude h2 at point Qe1 (h2 ≤ h_{U}).

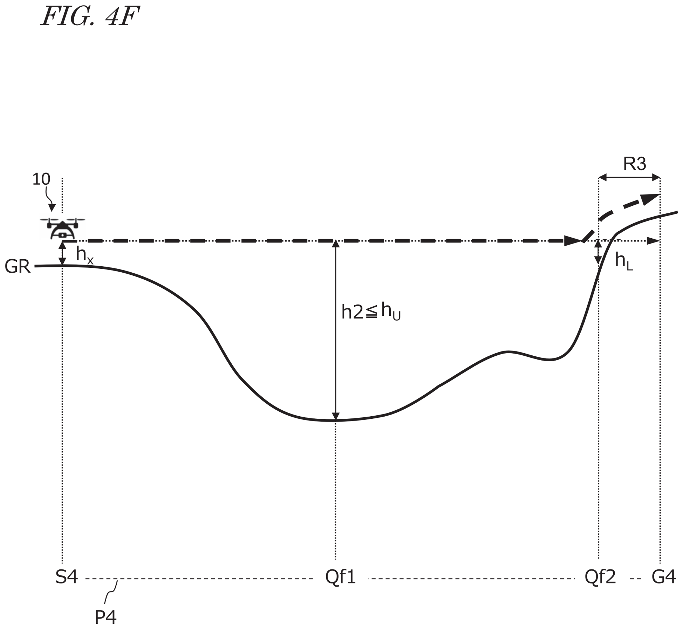

Referring to FIG. **4F****,** another example of processing performed by the flight path generation system will be explained. FIG. **4F** is a diagram schematically showing an example of the multicopter **10** flying along a two-dimensional flight path P4 (hereinafter, may be simply referred to as "flight path P4") from point S4 to point G4 using the flight path generation system. Explanations of matters common to FIG. **4E** will be omitted.

In the example shown in FIG. **4F****,** the processor determines the flight altitude along the flight path P4 such that the flight altitude over the entire flight path P4 is equal to or greater than the predetermined altitude h_{L}. Under an assumption that the flight path P4 is traveled by the multicopter **10** moving horizontally, if a third region R3 where the flight altitude of the multicopter **10** is less than the predetermined altitude h_{L} occurs on the flight path P4, the processor determines the flight altitude in the third region R3 such that the flight altitude of the multicopter **10** in the third region R3 is equal to or greater than the predetermined altitude h_{L}. For example, the multicopter **10** is moved horizontally from the start point S4 and begins to ascend before reaching the start point Qf2 of the third region R3. Alternatively, the multicopter **10** may begin to ascend at the same time as reaching the start point Qf2 of the third region R3. Note that in the example of FIG. **4F****,** under the assumption that the multicopter **10** moves horizontally along the flight path P4 (dotted arrow in FIG. **4F**), no region where the flight altitude exceeds the predetermined altitude h_{U} occurs on the flight path P4. The maximum value of the flight altitude of the multicopter **10** along the flight path P4 is the flight altitude h2 at point Of1 (h2 ≤ h_{U}).

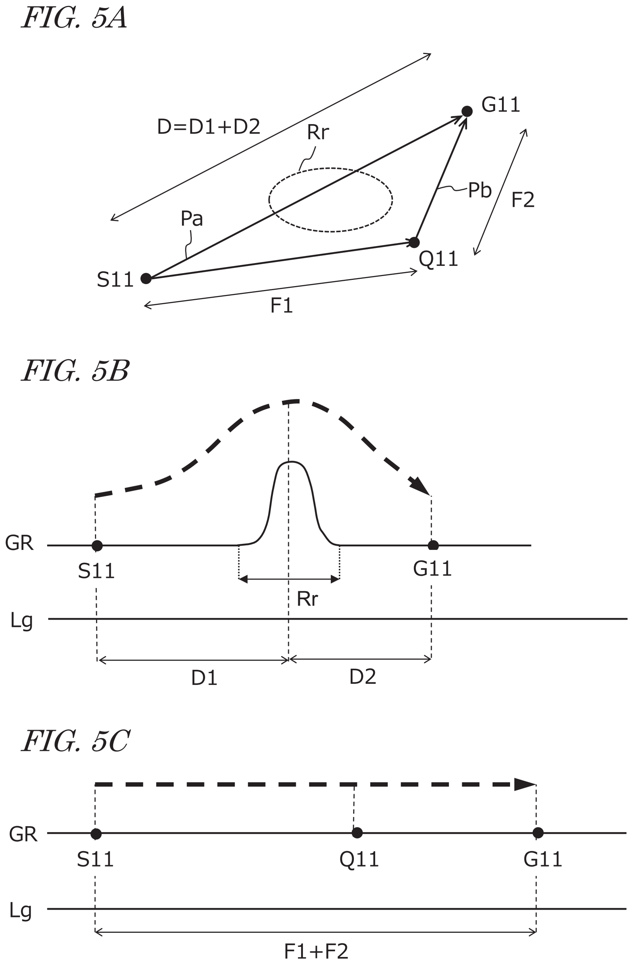

As explained with reference to FIGs. **5A, 5B,** and **5C****,** the processor can update the flight path based on the acquired flight path and elevation. FIG. **5A** is a diagram schematically showing an example of a flight path on a two-dimensional map from a start point S11 to a goal point G11. FIG. **5A** shows two-dimensional flight paths Pa and Pb (hereinafter, may be simply referred to as "flight path Pa" and "flight path Pb", respectively). FIGs. **5B** and **5C** are diagrams schematically showing the vertical movement of the multicopter **10** when flying along flight paths Pa and Pb, respectively. FIGs. **5B** and **5C** show the ground GR and a line Lg corresponding to the geoid or mean sea level.

As shown in FIG. **5A****,** there is a region Rr with higher elevation than the surrounding area between the start point S11 and the goal point G11. The flight path Pa is a path that connects the start point S11 and the goal point G11 with the shortest distance on a two-dimensional map. Since flight path Pa overlaps with the region Rr, when the multicopter **10** flies along the flight path Pa, it needs to move vertically as shown in FIG. **5B****.** The flight path Pb is a path that connects the start point S11 and the goal point G11 while avoiding the region Rr. The flight path Pb passes through point Q11 between the start point S11 and the goal point G11. When the multicopter **10** flies along the flight path Pb, as shown in FIG. **5C****,** it can reach the goal point G11 from the start point S11 by moving horizontally without moving vertically. Although the distance F1 + F2 of the flight path Pb on the plane is longer than the distance D (D = D1 + D2) of the flight path Pa on the plane, the driving energy required to fly along the flight path Pb may be less than the driving energy required to fly along the flight path Pa.

The processor may be configured to update the flight path in a plurality of modes, including, for example, a first mode that prioritizes reducing the driving energy of the multicopter **10** when flying along the flight path, and a second mode that prioritizes shortening the planar distance of the flight path. The mode for updating the flight path may be selected by the user. The start point and goal point of the flight path may be set by the user. The user may further set points to be passed between the start point and goal point. By setting points to be passed, it is possible, for example, to set a flight path that avoids airspace where flight is prohibited. Alternatively, it is also possible to set a flight path that includes areas where flight should be prioritized.

The processor may, for example, calculate the distance that the multicopter **10** is capable of moving horizontally when flying along the flight path, and update the flight path based on the calculated distance. For example, in the first mode, the processor updates the flight path so that the distance that can be moved horizontally increases. Alternatively, the processor may calculate the driving energy of the multicopter **10** when flying along the flight path, and update the flight path based on the calculated driving energy. For example, in the first mode, the processor updates the flight path so that the driving energy decreases.

The calculation of driving energy may be performed, for example, as follows. If the driving energy per unit distance required for the multicopter **10** to move horizontally is α, and the driving energy per unit distance required to move vertically is β for ascent and γ for descent, then the driving energy required to fly along the flight path Pa shown in FIG. **5B** is D1 × β + D2 × γ, and the driving energy required to fly along the flight path Pb shown in FIG. **5C** is (F1 + F2) × α. D1 and D2 are the lengths of the distances in the ascending region and the descending region of flight path Pb, respectively. Note that the method of calculating driving energy is not limited to this and may be appropriately corrected by further considering the flight conditions of the multicopter **10,** wind direction and speed during the flight of the multicopter **10,** flight altitude of the multicopter **10,** acceleration during ascent or descent of the multicopter **10,** rotational speed of rotor **2,** shape and weight of the multicopter **10,** etc. For example, the driving energy may be corrected considering that flight efficiency decreases as flight altitude increases due to decreased air pressure.

The control device **4a** in the embodiment of the present disclosure may be implemented by a digital computer system programmed to execute the processes described above.

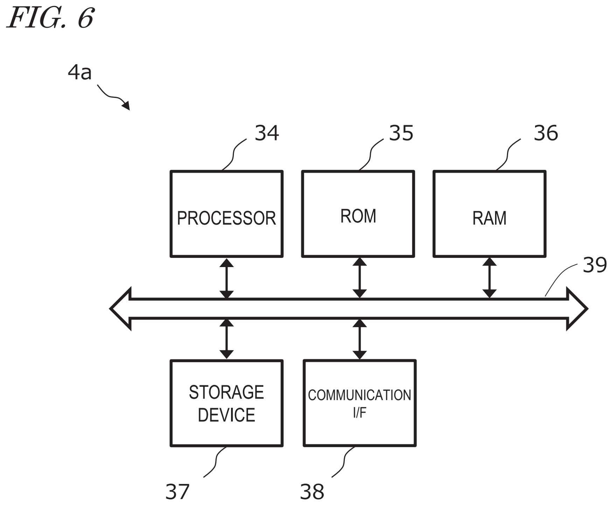

FIG. **6** is a block diagram showing an example of hardware configuration of the control device **4a.** The control device **4a** includes a processor **34,** ROM (Read Only Memory) **35,** RAM (Random Access Memory) **36,** storage device **37,** and communication I/F **38.** These components are interconnected via a bus **39.** The bus **39** is, for example, a CAN (Controller Area Network) bus.

The processor **34** is a device comprising one or more semiconductor integrated circuits (e.g., processors). The processor **34** sequentially executes computer programs stored in ROM **35** to implement the processes described above. The processor is also referred to as a central processing unit (CPU) or microprocessor. The processor is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** flight path data, and various sensor data acquired by the multicopter **10** during flight.

The processor **34** may function as the processor of the flight path generation system, and the storage device **37** may function as the storage device of the flight path generation system.

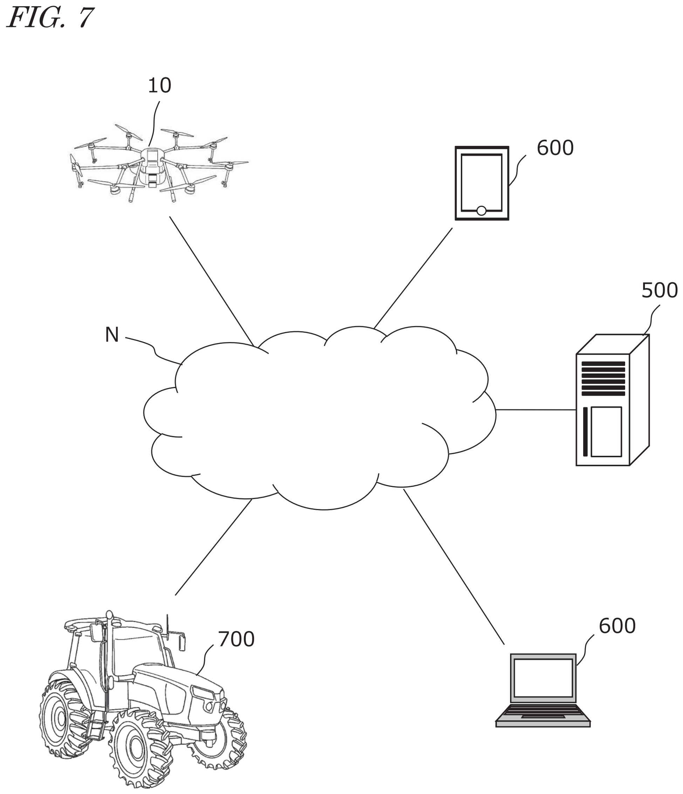

Note that, as mentioned earlier, the control device **4a** may include, for example, a flight control device such as a flight controller and a higher-level computer (companion computer). The companion computer may execute each process necessary for flight path generation and provide flight-related commands based on the results of those processes to the flight controller or the flight path generation system. Additionally, some or all of the functions of electronic components or the flight path generation system mounted on the multicopter **10,** such as the control device **4a,** may be implemented by one or more servers (computers) **500** or terminal devices (including portable and fixed types) **600** connected to the communication device **4c** of the multicopter **10** via a communication network N, as shown in FIG. **7****.** Agricultural machines **700** such as tractors may be connected to this communication network N, and communication may be performed between the multicopter **10** and the agricultural machines **700.** Through the communication network N, part of the data used for processing by the control device **4a,** and control signals for the multicopter **10** may be provided to the multicopter **10** from the agricultural machines **700.**

Systems that provide various functions in the embodiments can also be retrofitted to multicopters that do not have these functions. Such systems can be manufactured and sold independently of the multicopters. Computer programs used in such systems can also be manufactured and sold independently of the multicopters. Computer programs may be provided, for example, stored on computer-readable non-transitory storage media. Computer programs may also be provided through download via telecommunication lines (e.g., the Internet).

This specification discloses the flight path generation system, unmanned aerial vehicle, and flight path generation method described in the following items.

### [Item 1]

A flight path generation system for generating a three-dimensional flight path for an unmanned aerial vehicle, the flight path generation system comprising:
an acquisition device that acquires route data including information of a two-dimensional flight path of the unmanned aerial vehicle and map data including information of elevation at each point on the two-dimensional flight path; and
a processor that generates the three-dimensional flight path by determining a flight altitude of the unmanned aerial vehicle from a ground on the two-dimensional flight path based on the two-dimensional flight path and the elevation,
wherein, under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region,
the processor determines the flight altitude in the excess region and the first region such that:
   a maximum value of the flight altitude of the unmanned aerial vehicle in the excess region does not exceed the first predetermined altitude,
   the unmanned aerial vehicle descends in a descent region including part of the excess region or the first region, and
   the unmanned aerial vehicle moves horizontally over regions other than the descent region in the excess region and the first region.

### [Item 2]

The flight path generation system according to Item 1, wherein
the processor determines the flight altitude in the excess region and the first region such that the descent region is part of the excess region and does not include the first region.

### [Item 3]

The flight path generation system according to Item 1, wherein
the processor determines the flight altitude in the excess region and the first region such that the descent region is part of the first region and does not include the excess region.

### [Item 4]

The flight path generation system according to Item 1, wherein
the processor determines the flight altitude in the excess region and the first region such that the descent region includes part of the excess region and part of the first region.

### [Item 5]

The flight path generation system according to any one of Items 1 to 4, wherein
the processor determines the flight altitude in the excess region and the first region such that a distance that the unmanned aerial vehicle moves vertically in the descent region is equal to or less than a difference between a maximum value and a minimum value of elevations in the excess region.

### [Item 6]

The flight path generation system according to any one of Items 1 to 5, wherein
when a second region where the flight altitude does not exceed the first predetermined altitude further occurs on the two-dimensional flight path under the aforesaid assumption, the second region following the excess region,
the processor determines the flight altitude in the second region such that the unmanned aerial vehicle moves horizontally across the second region.

### [Item 7]

The flight path generation system according to any one of Items 1 to 5, wherein
when a second region where the flight altitude does not exceed the first predetermined altitude further occurs on the two-dimensional flight path under the aforesaid assumption, the second region following the excess region,
the processor determines the flight altitude in the second region such that: a minimum value of the flight altitude in the second region is equal to or greater than a predetermined second altitude, and the unmanned aerial vehicle ascends in at least part of the second region.

### [Item 8]

The flight path generation system according to any one of Items 1 to 7, wherein
under the aforesaid assumption, the processor sets the flight altitude at a start point of the two-dimensional flight path such that it does not exceed the first predetermined altitude.

### [Item 9]

The flight path generation system according to any one of Items 1 to 8, wherein
when no region where the flight altitude exceeds the first predetermined altitude occurs on the two-dimensional flight path under the aforesaid assumption,
the processor determines the flight altitude on the two-dimensional flight path such that the unmanned aerial vehicle moves horizontally along the two-dimensional flight path.

### [Item 10]

The flight path generation system according to any one of Items 1 to 9, wherein
the processor
determines the flight altitude on the two-dimensional flight path such that the flight altitude on the two-dimensional flight path is equal to or greater than a predetermined second altitude.

### [Item 11]

The flight path generation system according to any one of Items 1 to 10, wherein
the processor
calculates a distance that the unmanned aerial vehicle is capable of moving horizontally when flying along the two-dimensional flight path, based on the two-dimensional flight path and the elevation, and
updates the two-dimensional flight path based on the calculated distance.

### [Item 12]

The flight path generation system according to any one of Items 1 to 11, wherein
the processor
calculates driving energy of the unmanned aerial vehicle when flying along the two-dimensional flight path, based on the two-dimensional flight path and the elevation, and
updates the two-dimensional flight path based on the calculated driving energy.

### [Item 13]

The flight path generation system according to any one of Items 1 to 12, wherein
the processor is configured to update the two-dimensional flight path in a plurality of modes, and
the plurality of modes include:
   a first mode that prioritizes reducing driving energy of the unmanned aerial vehicle when flying along the two-dimensional flight path, and
   a second mode that prioritizes shortening a distance of the two-dimensional flight path.

### [Item 14]

An unmanned aerial vehicle comprising a plurality of rotors, further comprising:
a control device that controls flight of the unmanned aerial vehicle based on the three-dimensional flight path generated by the flight path generation system according to any one of Items 1 to 13.

### [Item 15]

The unmanned aerial vehicle according to Item 14, further comprising the flight path generation system.

### [Item 16]

A method for generating a three-dimensional flight path for an unmanned aerial vehicle, the method being a flight path generation method, the method comprising:
acquiring route data including information of a two-dimensional flight path of the unmanned aerial vehicle and map data including information of elevation at each point on the two-dimensional flight path; and
determining a flight altitude of the unmanned aerial vehicle from the ground on the two-dimensional flight path based on the two-dimensional flight path and the elevation,
wherein the determining the flight altitude includes:
   under an assumption that the unmanned aerial vehicle moves horizontally along the two-dimensional flight path, if an excess region where the flight altitude exceeds a predetermined first altitude and a first region where the flight altitude does not exceed the first predetermined altitude, the first region leading to the excess region, occur on the two-dimensional flight path,
   determining the flight altitude in the excess region and the first region such that:
      a maximum value of the flight altitude of the unmanned aerial vehicle in the excess region does not exceed the first predetermined altitude,
      the unmanned aerial vehicle descends in a descent region including part of the excess region or the first region, and
      the unmanned aerial vehicle moves horizontally over regions other than the descent region in the excess region and the first region.

### INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

### REFERENCE SIGNS LIST

**2**...rotor (propeller), **3**...rotation drive device, **4**...main body, **4a**...control device, **4b**...sensors, **4c**...communication device, **5**...body frame, **10**...multicopter, **12**...sub-rotor, **14**...motor, **16**...ESC, **22**...main rotor, **52**...battery

## Claims

1. A flight path generation system for generating a three-dimensional flight path for an unmanned aerial vehicle, the flight path generation system comprising:
an acquisition device that acquires route data including information of a two-dimensional flight path of the unmanned aerial vehicle and map data including information of elevation at each point on the two-dimensional flight path; and
a processor that generates the three-dimensional flight path by determining a flight altitude of the unmanned aerial vehicle from a ground on the two-dimensional flight path based on the two-dimensional flight path and the elevation,
wherein, under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region,
the processor determines the flight altitude in the excess region and the first region such that:
a maximum value of the flight altitude of the unmanned aerial vehicle in the excess region does not exceed the first predetermined altitude,
the unmanned aerial vehicle descends in a descent region including part of the excess region or the first region, and
the unmanned aerial vehicle moves horizontally over regions other than the descent region in the excess region and the first region.

2. The flight path generation system according to Claim 1, wherein
the processor determines the flight altitude in the excess region and the first region such that the descent region is part of the excess region and does not include the first region.

3. The flight path generation system according to Claim 1, wherein
the processor determines the flight altitude in the excess region and the first region such that the descent region is part of the first region and does not include the excess region.

4. The flight path generation system according to Claim 1, wherein
the processor determines the flight altitude in the excess region and the first region such that the descent region includes part of the excess region and part of the first region.

5. The flight path generation system according to any one of Claims 1 to 4, wherein
the processor determines the flight altitude in the excess region and the first region such that a distance that the unmanned aerial vehicle moves vertically in the descent region is equal to or less than a difference between a maximum value and a minimum value of elevations in the excess region.

6. The flight path generation system according to any one of Claims 1 to 5, wherein
when a second region where the flight altitude does not exceed the first predetermined altitude further occurs on the two-dimensional flight path under the aforesaid assumption, the second region following the excess region,
the processor determines the flight altitude in the second region such that the unmanned aerial vehicle moves horizontally across the second region.

7. The flight path generation system according to any one of Claims 1 to 5, wherein
when a second region where the flight altitude does not exceed the first predetermined altitude further occurs on the two-dimensional flight path under the aforesaid assumption, the second region following the excess region,
the processor determines the flight altitude in the second region such that: a minimum value of the flight altitude in the second region is equal to or greater than a predetermined second altitude, and the unmanned aerial vehicle ascends in at least part of the second region.

8. The flight path generation system according to any one of Claims 1 to 7, wherein
under the aforesaid assumption, the processor sets the flight altitude at a start point of the two-dimensional flight path such that it does not exceed the first predetermined altitude.

9. The flight path generation system according to any one of Claims 1 to 8, wherein
when no region where the flight altitude exceeds the first predetermined altitude occurs on the two-dimensional flight path under the aforesaid assumption,
the processor determines the flight altitude on the two-dimensional flight path such that the unmanned aerial vehicle moves horizontally along the two-dimensional flight path.

10. The flight path generation system according to any one of Claims 1 to 9, wherein
the processor
determines the flight altitude on the two-dimensional flight path such that the flight altitude on the two-dimensional flight path is equal to or greater than a predetermined second altitude.

11. The flight path generation system according to any one of Claims 1 to 10, wherein
the processor
calculates a distance that the unmanned aerial vehicle is capable of moving horizontally when flying along the two-dimensional flight path, based on the two-dimensional flight path and the elevation, and
updates the two-dimensional flight path based on the calculated distance.

12. The flight path generation system according to any one of Claims 1 to 11, wherein
the processor
calculates driving energy of the unmanned aerial vehicle when flying along the two-dimensional flight path, based on the two-dimensional flight path and the elevation, and
updates the two-dimensional flight path based on the calculated driving energy.

13. The flight path generation system according to any one of Claims 1 to 12, wherein
the processor is configured to update the two-dimensional flight path in a plurality of modes, and
the plurality of modes include:
a first mode that prioritizes reducing driving energy of the unmanned aerial vehicle when flying along the two-dimensional flight path, and
a second mode that prioritizes shortening a distance of the two-dimensional flight path.

14. An unmanned aerial vehicle comprising a plurality of rotors, further comprising:
a control device that controls flight of the unmanned aerial vehicle based on the three-dimensional flight path generated by the flight path generation system according to any one of Claims 1 to 13.

15. The unmanned aerial vehicle according to Claim 14, further comprising the flight path generation system.

16. A method for generating a three-dimensional flight path for an unmanned aerial vehicle, the method being a flight path generation method, the method comprising:
acquiring route data including information of a two-dimensional flight path of the unmanned aerial vehicle and map data including information of elevation at each point on the two-dimensional flight path; and
determining a flight altitude of the unmanned aerial vehicle from the ground on the two-dimensional flight path based on the two-dimensional flight path and the elevation,
wherein the determining the flight altitude includes:
under an assumption that the two-dimensional flight path is traveled by the unmanned aerial vehicle moving horizontally, if an excess region where the flight altitude exceeds a predetermined first altitude and a first region where the flight altitude does not exceed the first predetermined altitude occur on the two-dimensional flight path, the first region leading to the excess region,
determining the flight altitude in the excess region and the first region such that:
a maximum value of the flight altitude of the unmanned aerial vehicle in the excess region does not exceed the first predetermined altitude,
the unmanned aerial vehicle descends in a descent region including part of the excess region or the first region, and
the unmanned aerial vehicle moves horizontally over regions other than the descent region in the excess region and the first region.
